(19) Europäisches Patentamt
European Patent Office
Office européen des brevets

(11) **EP 2 685 325 B1**

(12) **EUROPÄISCHE PATENTSCHRIFT**

(45) Veröffentlichungstag und Bekanntmachung des Hinweises auf die Patenterteilung:
**06.04.2016  Patentblatt 2016/14**

(51) Int Cl.:
**G04B 17/06** (2006.01)   **F16F 1/02** (2006.01)

(21) Anmeldenummer: **12175934.4**

(22) Anmeldetag: **11.07.2012**

(54) **Spiralfeder, Verfahren zu deren Herstellung, Verwendungsmöglichkeiten sowie mikromechanisches Getriebe**

Spiral spring, method for producing the same, applications and micromechanical drives

Ressort spiralé, procédé de fabrication, possibilités d'application ainsi qu'un entraînement micro-mécanique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.01.2014  Patentblatt 2014/03**

(73) Patentinhaber:
• **Diamaze Microtechnology S.A.**
**2300 La Chaux-de-Fonds (CH)**
• **GFD Gesellschaft für Diamantprodukte mbH**
**89081 Ulm (DE)**

(72) Erfinder:
• **Gluche, Peter**
**89287 Bellenberg (DE)**
• **Gretzschel, Ralph**
**89231 Neu-Ulm/Offfenhausen (DE)**

(74) Vertreter: **Pfenning, Meinig & Partner mbB**
**Patent- und Rechtsanwälte**
**Theresienhöhe 11a**
**80339 München (DE)**

(56) Entgegenhaltungen:
**EP-A2- 2 320 281   WO-A1-2004/092049**

## Beschreibung

Die vorliegende Erfindung betrifft eine Spiralfeder, die zumindest teilweise oder vollständig aus speziellen Glaskeramiken gebildet ist, die einen linearen thermischen Ausdehnungskoeffizienten im Temperaturbereich von -50 bis 100°C von 0 bis $2x10^{-6} \cdot K^{-1}$, insbesondere von 0 bis $0,5x10^{-6} \cdot K^{-1}$, aufweist. Ebenso betrifft die Erfindung ein Verfahren zur Herstellung einer entsprechenden Spiralfeder. Verwendung findet die erfindungsgemäße Spiralfeder für mikromechanische Getriebe, ein Mikrogetriebe, insbesondere ein Uhrwerk,

Nach dem Stand der Technik sind mikromechanische Bauteile gewöhnlich aus Metallen oder anderen Festkörpern hergestellt. Es wurden bereits mikromechanische Bauteile aus Silizium und Diamant mit Abmessungen, wie sie beispielsweise für den Einsatz in einer Uhr benötigt werden, gefertigt. In der WO 2004/092049 A1 sind derartige Mikromechanische Bauteile beschrieben, die auch als Uhrwerksbauteile eingesetzt werden können. Die dort beschriebenen Bauteile zeichnen sich dadurch aus, dass sie sich in exakten Abmessungen herstellen lassen. Damit wird für Uhrwerksbauteile, unter anderem, eine hohe Ganggenauigkeit erreicht. Die Uhrwerksbauteile werden nach der WO 2004/092094 A1 nach einem speziellen Ätzverfahren hergestellt. Der Mechanische Feder-Masse Oszillator, bestehend aus Unruh (Masse) und Spiralfeder, wie er typischerweise bei mechanischen Uhren Verwendung findet, definiert die Ganggenauigkeit der Uhr. Geringe Schwankungen in der Frequenz des Oszillators, welche z.B. durch Temperaturschwankungen verursacht werden, führen zu großen Gangabweichungen der Uhr. Hierbei sind insbesondere der Wärmeausdehnungskoeffizient als auch der Temperaturkoeffizient des Elastizitätsmoduls des Feder und Unruhmaterials die Haupteinflussgrößen. Aus diesem Grund wird seit langem daran geforscht, neue Materialien mit verbesserten thermischen Eigenschaften in mechanischen Oszillatoren einzusetzen. So beschreibt beispielsweise WO2009068091 (A1) die Herstellung von thermokompensierten Siliziumspiralfedern. Um den unerwünschten Temperatureinfluss so gering wie möglich zu halten, wird das Silizium nach dem Ätzen der Feder thermokompensiert. Dies geschieht durch einen Oxidationsschritt. Hierbei wirkt der negative Temperaturkoeffizient des E-Moduls des $SiO_2$ dem positiven, des Si entgegen, so dass eine nahezu vollständige Temperaturkompensation erreicht werden kann. Nachteilig dabei ist, dass für die Herstellung derartige Uhrwerksbauteile eine aufwändige Thermokompensation durchgeführt werden muss, die bislang relativ aufwändig und damit teuer ist, so dass der Einsatz solcher Bauteile bislang auf teure Uhren beschränkt ist. Um die Ganggenauigkeit von mechanischen Uhrwerken zu verbessen wurde deshalb versucht, andere Werkstoffe mit ähnlichen oder besseren physikalischen Eigenschaften wie Silizium oder Diamant für Uhrwerksbauteile einzusetzen. Insbesondre sind die glaskeramischen Werkstoffe aufgrund Ihrer herausragenden thermischen Eigenschaften ins Rampenlicht der Entwicklung geraten.

So wird in der EP 1791039 A1 eine Spiralfeder aus dem glaskeramischen Werkstoff Foturan beschrieben. Foturan ist ein fotosensitives Glas, das von der Firma Schott hergestellt wird. Es hat sich aber gezeigt, dass sich eine derartige Spiralfeder bislang nicht in den für Uhrwerksbauteilen erforderlichen exakten Abmessungen herstellen lässt, so dass derartige Spiralfedern in der Praxis noch keinen Eingang gefunden haben.

In der CH 702 151 A1 wird beschrieben, dass sich eine Feder aus dem Werkstoff Zerodur®, der Firma Schott, herstellen lässt. Allerdings hat auch diese Spiralfeder bislang keine Verwendung in der Praxis gefunden, da die Feder in ihren Abmessungen nicht den Erfordernissen für Uhrwerksbauteile entsprach.

Die vorliegende Erfindung stellt sich somit die Aufgabe, Spiralfedern anzugeben, die im Fall von Temperaturschwankungen möglichst kleine Änderungen Ihrer Rückstellkraft aufweisen und die über einen großen Temperaturbereich möglichst gleichbleibende mechanische Eigenschaften innehaben. Ebenso ist es Aufgabe der vorliegenden Erfindung, ein entsprechendes Verfahren zur Herstellung derartiger Spiralfedern anzugeben.

Diese Aufgabe wird mit einer Spiralfeder mit den Merkmalen des Patentanspruchs 1, mit einem Herstellungsverfahren mit den Merkmalen des Patentanspruchs 8, hinsichtlich des Verwendungszwecks mit den Merkmalen des Patentanspruchs 18, sowie bezüglich eines Einsatzes in einem mikromechanisches Getriebe mit den Merkmalen des Patentanspruchs 19 gelöst.

Erfindungsgemäß wird somit eine Spiralfeder bereitgestellt, die ein in Windungen zur Spiralfederachse parallel stehendes aufgewickeltes Federblatt umfasst, wobei das Federblatt in Wicklungsrichtung der Windungen einen im Wesentlichen oder vollständig rechteckigen Querschnitt aufweist. Erfindungsgemäß ist das Federblatt der Spiralfeder zumindest bereichsweise oder vollständig aus einer speziellen Glaskeramik gebildet, die einen linearen thermischen Ausdehnungskoeffizienten im Temperaturbereichen von -50 bis 100°C von 0 bis $2x10^{-6} \cdot K^{-1}$, insbesondere von 0 bis $0,5x10^{-6} \cdot K^{-1}$ aufweist.

Vorzugsweise handelt es sich bei diesen Glaskeramiken um Aluminiumsilikat-Glaskeramiken, bevorzugt aus Zerodur®, Zerodur® M oder Zerodur® K20.

Zerodur® ist ein glaskeramischer Werkstoff der Schott AG, der durch kontrollierte Volumenkristallisation hergestellt wird. Zerodur® enthält eine kristalline Phase und eine Restglasphase, durch welche die außergewöhnlichen Eigenschaften des Werkstoffes bestimmt werden. Zu diesen besonderen Merkmalen zählen ein äußerst geringer thermischer Ausdehnungskoeffizient, ein sehr geringer oder sogar negativer Temperaturkoeffizient des Elastizitätsmoduls, gute Materialhomogenität, chemische Beständigkeit, Langzeitstabilität sowie kaum schwankende mechanische Eigenschaften in Abhängigkeit von der Temperatur. Dadurch eignet sich der Werkstoff Zerodur®, von Schott, ideal als Material für Uhrwerksbauteile, wie eine Unruhspiralfeder. Die Erfindung umfasst somit die Verwendung des Werkstoffes Zerodur®, der Firma Schott, inklusive seiner Materialvarianten Zerodur® K20 sowie Zerodur® M. Bezüglich der genauen stofflichen Zusammensetzung von Zerodur® wird auf die Produktinformationen der Firma Schott zu Zerodur® verwiesen ( Schott AG Zerodur®, www.schott.com/advanced optics/german/our_products/Zerodur/ index.html).

Da die Spiralfeder, wie vorstehend dargelegt aus einer speziellen Aluminiumsilikat-Glaskeramiken gefertigt ist, hat diese überragende mechanische und chemische Eigenschaften, insbesondere sind hier der geringe Wärmeausdehnungskoeffizient und der geringe Temperaturkoeffizient des E-Moduls zu nennen. Ebenso weist sie keine inneren Spannungen auf und besitzt ein homogenes Materialgefüge. Ein weiterer Vorteil der Spiralfeder ist deren gleichmäßige und präzise Form, d.h. es liegt ein regelmäßiger Abstand p der Federwindungen zueinander vor, wodurch der ein rotationssymmetrischer Betrieb der Spiralfeder ermöglicht wird. Weiterhin besitzt das Material der Spiralfeder isotrope mechanischen Eigenschaften im Gegenteil zu Federn aus Einkristallen wie Silizium , für das das E-Modul und die Bruchspannung in verschiedenen Kristallrichtungen ungleich ist, was zur Folge hat, dass ggf. eine Kompensation durch Geometrieanpassung notwendig ist. All diese Eigenschaften ermöglichen es, Spiralfedern mit bisher nicht erreichten Gebrauchseigenschaften herzustellen.

Erfindungswesentlich ist dabei, dass die Spiralfeder in ihren Abmessungen exakt ausgebildet ist. Da die Schwingfrequenz des Feder-Masseoszillators durch die folgenden Gleichung gegeben ist:

$$f = \frac{1}{2 \times \pi} \sqrt{\frac{I}{M}}$$

mit:

I=Trägheitsmoment der Unruh um seine Drehachse
M=Federkonstante der Spiralfeder

Die Federkonstante einer Spiralfeder ist gem. Theorie der Uhrmacherei, ISBN 2-940025-11-8, 2001

$$M = \frac{E \times h \times e^3}{12 \times L}$$

mit

E= Elastizitätsmodul des Federmaterials
h= Federblatthöhe
e= Federblattstärke
L= abgewickelte Länge des Federblatts

Wobei die Abmessungen e, h und L über den thermischen Ausdehnungskoeffizienten von der Temperatur abhängig sind und E im Wesentlichen aufgrund der Materialeigenschaften Temperaturabhängig ist. Typischerweise überwiegt E(T) und e(T), da letztere Abmessung mit der 3. Potenz in die Schwingfrequenz eingeht.

Die Auswahl eines geeigneten Materials, d.h. mit einem möglichst kleinen thermischen Ausdehnungskoeffizienten und einem Material mit geringem oder negativem Temperaturkoeffizienten des E-Moduls sind deshalb der Schlüssel für einen thermisch stabilen und damit ganggenauen mechanischen Oszillator.

Der Winkel des im Wesentlichen rechtwinkligen Querschnitts des Federblatts weicht erfindungsgemäß weniger als 10°, bevorzugt um weniger als 3°, besonders bevorzugt um weniger als 1° von der Senkrechten ab. Dadurch wird erreicht, dass die Federwindungen während der Drehbewegung in einer Ebene bleiben und kein resultierendes Moment in Richtung der Drehachse erzeugt wird, womit die Feder überhaupt erst funktionstüchtig ist.

Der rechteckige Querschnitt der Spiralfeder kann dabei beliebige Geometrien aufweisen, beispielsweise quadratisch oder rechteckig ausgebildet sein, d. h. an den jeweiligen Ecken dieser geometrischen Körper liegt ein Winkel von genau 90° vor. Vorteilhafterweise weist der Querschnitt des Federblatts ein hohes Aspektverhältnis h/e auf, damit sichergestellt ist, dass die Federwindungen in der Federebenen (typischerweise senkrecht zur Drehachse des Oszillators) ausschwingen. Üblicherweise sollte das Aspektverhältnis bei ≥3 liegen. Ferner ergeben sich aufgrund des E-Moduls üblicherweise Federblattstärken von 10-50μm. Diese geometrischen Voraussetzungen stellen sehr hohe Anforderung an das Fertigungsverfahren.

Aufgrund der sehr dünnen Federblattbreite ist die Feder sehr bruchempfindlich. Andererseits muss sie aber mindestens das Gewicht der Unruh bereits beim Einbau tragen können. Denn üblicherweise werden zunächst Unruh und Unruhfeder zu einer Baugruppe zusammengebaut und anschließend mit dem Unruhkloben oder der Unruhbrücke verbunden. Der gesamte Oszillator wird anschließend, mit an der Unruhfeder freihängender Unruh, in die Uhrwerksplatine eingesetzt. Damit muss die Feder eine gewisse Mindestbruchspannung aufweisen, um der Belastung beim Einbau und auch gegen Schockeinwirkung standhalten zu können. Es ist bekannt, dass jeder Fabrikationsfehler der zu einer lokalen Reduzierung der Federblattbreite führt wirkt, als Ansatzpunkt für einen Bruch der Feder wirken kann. Deshalb muss das Fertigungsverfahren auf der Seitenflanke eine möglichst geringe Oberflächenrauheit aufweisen. Metallfedern werden deshalb üblicherweise gewalzt, um einerseits die hohe Genauigkeit an die Federblattstärke und andererseits eine möglichst geringe Oberflächenrauheit der Seitenflanke sicherzustellen. Der Einsatz von Glaskeramik hingegen scheiterte bislang an einem geeigneten Herstellungsverfahren, mit dem einerseits das hohe Aspektverhältnis, die hohe Vertikalität und die geringe Oberflächenrauheit der Seitenflanke gewährleistet werden konnte. Dies wird durch die vorliegende Erfindung nun gelöst.

Ebenso ist es jedoch möglich, dass der Querschnitt im Rahmen der oben angegebenen Definition von der idealen rechtwinkligen Geometrie abweicht, so dass der Querschnitt auch trapezoidal oder in Form eines Parallelogramms ausgebildet sein kann.

Erfindungsgemäß wird somit eine Spiralfeder bereitgestellt, die aus speziellen Glaskeramiken gebildet ist, wobei das zu Windungen aufgewickelte Federblatt Oberflächen aufweist, die senkrecht oder im Wesentlichen senkrecht aufeinander stehen.

Das Federblatt ist dabei bevorzugt in einer Ebene liegend um eine Wicklungsachse herum in Windungen zur Spiralfeder aufgewickelt.

Eine bevorzugte Ausführungsform sieht vor, dass das Federblatt der Spiralfeder vollständig aus dem zuvor genannten Aluminiumsilikat-Glaskeramiken gebildet ist.

Alternativ hierzu ist es jedoch ebenso möglich, dass das Federblatt lediglich teilweise aus den glaskeramischen Materialien besteht, beispielsweise dadurch, dass mindestens eine Oberfläche des Federblattes zumindest bereichsweise oder vollständig aus der Aluminiumsilikat-Glaskeramik gebildet ist. Gemäß dieser Ausführungsform kann das Federblatt der Spiralfeder somit einen Kern aus anderen Materialien aufweisen und eine Aluminiumsilikat-Glaskeramik ist, als Oberflächenbeschichtung darauf abgeschieden. Alternativ kann das vollständig aus glaskeramischen Materialien bestehende Federblatt auch von einer weiteren Schicht, welche nachträglich aufgebracht wird, ganz oder bereichsweise beschichtet sein. Hierdurch ergibt sich beispielsweise wie beim Silizium noch die Möglichkeit einer weiteren Thermokompensation, bzw. einer Einstellmöglichkeit des resultierenden E-Moduls und Wärmeausdehnungskoeffizienten. Ferner kann die Feder neben dem thermischen Kompensationseffekt auch zur Erhöhung Ihrer mechanischen Stabilität mit einer Diamantschicht teilweise oder vollständig überzogen werden. Vorteilhaft sind hierbei nanokristalline Diamantschichten mit einer mittleren Korngröße von $\leq 100$nm, einer möglichst hohen Biegebruchspannung von $\geq 2$GPa (besonders bevorzugt $\geq 5$GPa) und einem niedrigen Elastizitätsmodul von $\leq 800$GPa. Die Diamantschicht ist vorteilhafterweise als Einhüllende ausgelegt, so dass die Glaskeramik effizient an jeder Stelle gegen Beschädigung und Bruch schützt.

Weiter ist es vorteilhaft, wenn mindestens die Flanken des Federblattes, bevorzugt aber alle der Oberflächen des Federblattes eine mittlere Rauigkeit $R_{rms} \leq 10 \, \mu m$, bevorzugt $\leq 5 \, \mu m$, besonders bevorzugt $\leq 2 \, \mu m$, insbesondere $\leq 100$ nm aufweist. Unter $R_{rms}$ wird die Wurzel des arithmetischen Mittels verstanden (engl. root mean square). Die sogenannte quadratische Rauheit (engl. *rms-roughness = root-mean-squared roughness*) wird aus dem Mittel der Abweichungsquadrate berechnet und entspricht dem "quadratischen Mittel":

$$R_q = \sqrt{\frac{1}{M\,N} \sum_{m=1}^{M} \sum_{n=1}^{N} \left( z\left( x_m, y_n \right) - \langle z \rangle \right)^2}$$

Vorzugsweise beträgt die Dicke h des Federblatts, parallel zur Wicklungsachse zwischen 30 $\mu m$ und 500 $\mu m$, besonders bevorzugt 100 $\mu m$ bis 200 $\mu m$.

In einer weiter bevorzugten Ausführungsform beträgt die Dicke e des Federblatts senkrecht zur Wicklungsachse zwischen 10 $\mu m$ und 500 $\mu m$, bevorzugt zwischen 10 $\mu m$ und 50 $\mu m$.

Zudem ist es bevorzugt, wenn die Windungen, in denen das Federblatt zur Spiralfeder aufgewickelt ist, eine gleichmäßige Wicklung aufweisen, d.h. im entspannten Zustand der Spiralfeder an jeder Stelle ein im Wesentlichen gleicher Abstand p senkrecht zur Wicklungsachse zwischen zwei Windungen besteht. Beispielsweise kann die Spiralfeder so gewickelt sein, dass der Abstand zwischen zwei Windungen zwischen 20 $\mu m$ und 1000 $\mu m$ beträgt. Der Wicklungsabstand wird üblicherweise so gewählt, dass die Windungen sich im kontrahierten Zustand nicht berühren. Dies tritt üblicherweise bei etwa p = 4 x e ein.

Erfindungsgemäß wird zudem ein Verfahren zur Herstellung einer oben genannten Spiralfeder angegeben, das die folgenden Schritte umfasst:

a) Bereitstellen eines strukturierten Wafers als Maske,

b) Auftragen eines Klebstoffs auf einer Oberfläche einer Scheibe aus einer Glaskeramik, die einen linearen thermischen Ausdehnungskoeffizienten im Temperaturbereich von -50 bis 100°C von 0 bis $2x10^{-6}\cdot K^{-1}$, insbesondere von 0 bis $0,5x10^{-6}\cdot K^{-1}$ aufweist,

c) Aufkleben der Maske auf der mit Klebstoff versehenen Oberfläche der Glaskeramik-Scheibe,

d) Entfernung des in den strukturierten Bereichen der Maske verbleibenden Klebstoffs,

e) Materialabtrag an der Oberfläche der Glaskeramik-Scheibe in den durch die Maske vorgegebenen strukturierten Bereichen mittels Plasmaätzen, wobei eine Biasspannung von kleiner oder gleich -200 V zum Sputtern der Glaskeramik-Scheibe notwendig ist, so dass es zu einer Redeposition des gesputterten Materials an den Seitenflanken der strukturierten Bereiche der Maske sowie der Glaskeramik-Scheibe in Form einer Sputterschicht kommt, sowie

f) Chemischer Ätzangriff zur Entfernung der Sputterschicht an den Seitenflanken der strukturierten Bereiche der Maske sowie der GlaskeramikScheibe vorzugsweise im Plasma und simultan zu Schritt e).

Im Stand der Technik üblicherweise durchgeführte Plasmaätzschritte arbeiten mit Biasspannungen von unter -200V um ein physikalisches Ätzen (Sputtern) und damit die parasitäre Abscheidung einer Schicht auf den Seitenflanken des Ätzgrabens zu vermeiden. Unter Biasspannung wird hierbei die Spannung verstanden, welche sich durch den Ionenbeschuss beispielsweise in einen RF-Parallelplattenreaktor (RIE Reactive ion etching) auf der Substratelektrode von selbst ausbildet. Alternativ kann auch ein auf einem induktiv gekoppelten Plasma (ICP) basierendes Ätzsystem zur Verwendung gelangen, wobei auch hier gilt, dass eine hohe Biasspannung an der Substratelektrode erreicht werden muss. Beim ICP System ist eine höhere Ätzrate aufgrund der höheren Plasmadichte zu erwarten. Die Beschreibung derartiger Systeme kann der einschlägigen Literatur entnommen werden. Alternativ kann die Biasspannung aber auch durch Anlegen einer Spannung, insbesondere in anderen Ätzsystemen, erzwungen werden. Das erfindungsgemäße Verfahren macht sich nun genau diesen (sonst unerwünschten) Effekt, d.h. die parasitäre Abscheidung (Redeposition) einer Schicht auf der geätzten Seitenflanke der Maske und der Glaskeramik-Scheibe zu Nutze, um die entsprechende Vertikalität und die Oberflächenrauheit der Seitenflanke zu erreichen. Das Sputtern führt dazu, dass sich auf den Seitenflanken der Maske und der Glaskeramik-Scheibe eine Schicht bildet. Diese verhindert das chemische Unterätzen der Seitenflanke des zu ätzenden Mediums und schützt auch die Maske in der horizontalen Abmessung. Durch den starken Beschuss (Ionenenergie $\geq$200eV) wird die Maske von Ihrer Oberfläche natürlich auch teilweise abgetragen, dies jedoch idealerweise nur in senkrechter Richtung in Bezug auf die zu ätzende Oberfläche. Daher muss die Maske eine ausreichende Dicke für die Einhaltung der horizontalen Dimensionen besitzen. Die Maske wird also geopfert. Dünne Photolacke oder Metallmasken eignen sich im erfindungsgemäßen Verfahren daher für einen solchen Prozess nicht. Vorzugsweise besitzt daher die Maske mindestens die Dicke der Glaskeramik-Scheibe.

Durch die Deposition der Sputterschicht wird allerdings auch die Vertikalität nachteilig beeinflusst. Je höher die Depositionsrate $V_4$ ist, umso mehr weicht die Seitenflanke aus der Senkrechten ab. Deshalb muss zur Erreichung einer möglichst vertikalen Seitenflanke die Depositionsrate $V_4$ reduziert werden. Ein geringerer Ionenbeschuss (erreichbar durch eine geringe Biasspannung) hätte zwar den gewünschten Effekt zur Folge, würde in Konsequenz aber auch zu einer deutlichen Reduktion der Ätzrate der Glaskeramik führen. Deshalb wird ein anderer Ansatz gewählt. Hierzu wird in den Reaktor im laufenden Ätzbetrieb eine weitere reaktive Gaskomponente zugemischt, welche die entstehende Schicht auf der Seitenflanke chemisch angreift, d.h. ätzt. Diese Ätzrate wirkt der Depositionsrate entgegen und reduziert damit effektiv den Vektor $V_4$. Im Idealfall wird das Gasgemisch so eingestellt, dass die Depositionsrate gleich der Ätzrate ist, so dass in Summe weder eine Schicht aufgebaut noch die Maske lateral abgetragen oder die Glaskeramik unterätzt wird. Da der Ionenbeschuss eine herausragende Bedeutung für das Prozessergebnis besitzt, ist es vorteilhaft nicht die RF oder ICP Leistung vorzugeben, sondern auf die Biasspannung zu regeln. Stellgröße ist dann typischerweise die eingekoppelte Leistung. Kammerdruck, Gasflüsse, Substratelektrodentemperatur, werden ebenfalls vorgegeben und geregelt.

Das chemische Ätzen zur Entfernung der Sputterschicht an den Seitenflanken der strukturierten Bereiche der Maske sowie der Glaskeramik-Scheibe kann gemäß einer erfindungsgemäßen Ausführungsform auch durch Unterbrechung des Plasmaätzprozesses und durch chemisches Ätzen mittels Phosphorsäure oder Peroxomonoschwefelsäure ($H_2O_2H_2SO_4$, auch als Piranha-Säure bekannt) erfolgen.

Besonders bevorzugt ist es, dass die Schritte e) und f) simultan erfolgen, d.h. Redeposition des gesputterten Materials und chemisches Ätzen der sich bei der Redeposition bildenden Sputterschicht auf den Seitenflanken erfolgen gleichzeitig. Dies wird dadurch erreicht, dass beim Plasmaätzen vorzugsweise eine chlorhaltige Komponente, z.B. $SiCl_4$, $BCl_2$ oder $Cl_2$, der Gasatmosphäre zugesetzt wird. Ziel ist es dabei, die Redepositionsrate der "parasitären" Schicht und deren Ätzrate genau so einzustellen, dass diese gleich groß sind. Daraus resultiert eine vertikale Seitenflanke mit minimaler Oberflächenrauheit.

Beim erfindungsgemäßen Verfahren liegt die Glaskeramik bevorzugt in Form einer Aluminiumsilikat-Scheibe mit einer vorbestimmten Dicke vor. Diese Aluminiumsilikat-Scheibe wird durch im Stand der Technik bekannten Reinigungsschritte gereinigt. Als Maske wird bevorzugt Si in Form einer Siliziumscheibe (Wafer) eingesetzt. Der Wafer wird vorstrukturiert z.B. mittels Photolithographie und Reaktivem Ionentiefenätzen (engl. deep reactive ion etching, DRIE) strukturiert. Gegebenenfalls kann die durch das Ätzen hervorgerufene Oberflächenrauheit auf den Seitenflanken der Ätzstrukturen noch durch eine nachgeschaltete, auch mehrfache Oxidation, geglättet werden. Die Strukturen werden mit kleinen Brücken im Wafer gehalten. Durch das Verfahren ist sichergestellt, dass bereits die Seitenflanken der Maske sehr glatt sind und damit eine gute Grundlage für den Strukturübertrag bieten.

Das Aufkleben des Wafers als Maske auf die Glaskeramik-Scheibe erfolgt bevorzugt durch Auftragung eines 2-Komponenten-Klebstoffs, besonders bevorzugt ein Epoxy-Klebstoff. Der Klebstoff wird dabei bevorzugt mit einer mit einer Schichtdicke von 0,5 bis 5 $\mu$m aufgetragen. Anschließend wird dann der Wafer vorzugsweise auf die Glaskeramik-Scheibe aufgelegt, ggf. angepresst und ausgehärtet.

Die Entfernung des in den strukturierten Bereichen der Maske verbleibenden Klebstoffs erfolgt vorzugsweise mittels Plasma-Veraschung im Sauerstoffplasma oder mittels organischen Lösungsmitteln, insbesondere Aceton oder Isopropanol. Ebenso ist es möglich, für die Entfernung Peroxomonoschwefelsäure ($H_2O_2H_2SO_4$, auch als Piranha-Säure bekannt) oder organische Lösungs-. mittel einzusetzen.

Bevorzugt wird der Ätzschritt trockenchemisch unter Zuhilfenahme eines Plasmas oder durch reaktives Ionenätzen, RIE durchgeführt.

Erfindungsgemäß ist es auch möglich, dass zunächst ein unstrukturierter Si-Wafer auf die Glaskeramik-Scheibe geklebt wird und anschließend erst die Strukturierung des Si-Wafers zur Maske erfolgt.
Ebenso kann mit Sauerstoff, Fluor und/oder Chlor als reaktiver Komponente oder mit einem Edelgas der Gruppe 8 des Periodensystems als physikalische Komponente geätzt werden.

Während des Ätzschrittes wird vorzugsweise eine Biasspannung von -200 bis - 1500 Volt, bevorzugt von -350 bis -1000 Volt, besonders bevorzugt von -600 bis -900 Volt an dem Substrat, bzw. der Substratelektrode anliegt bzw. angelegt wird.

Zudem betrifft die vorliegende Erfindung die Verwendung einer zuvor beschriebenen erfindungsgemäßen Spiralfeder für ein mikromechanisches Getriebe, ein Mikrogetriebe, insbesondere ein Uhrwerk.

Die vorliegende Erfindung betrifft ebenso die entsprechenden Bauteile, nämlich ein mikromechanisches Getriebe, insbesondere ein Mikrogetriebe oder Uhrwerk, die eine erfindungsgemäße Spiralfeder umfassen.

Die vorliegende Erfindung wird anhand des nachfolgenden Beispiels und der Figuren näher beschrieben, ohne die Erfindung auf die dort beschriebenen Parameter zu beschränken.

Dabei zeigen:

Figur 1A-1E     Schematische Darstellung des Herstellungsverfahrens einer erfindungs-gemäßen Spiralfeder.

Figur 2     eine erfindungsgemäße Spiralfeder

Figur 3     den Querschnitt eines zur Spiralfeder aufgewickelten Federblatts.

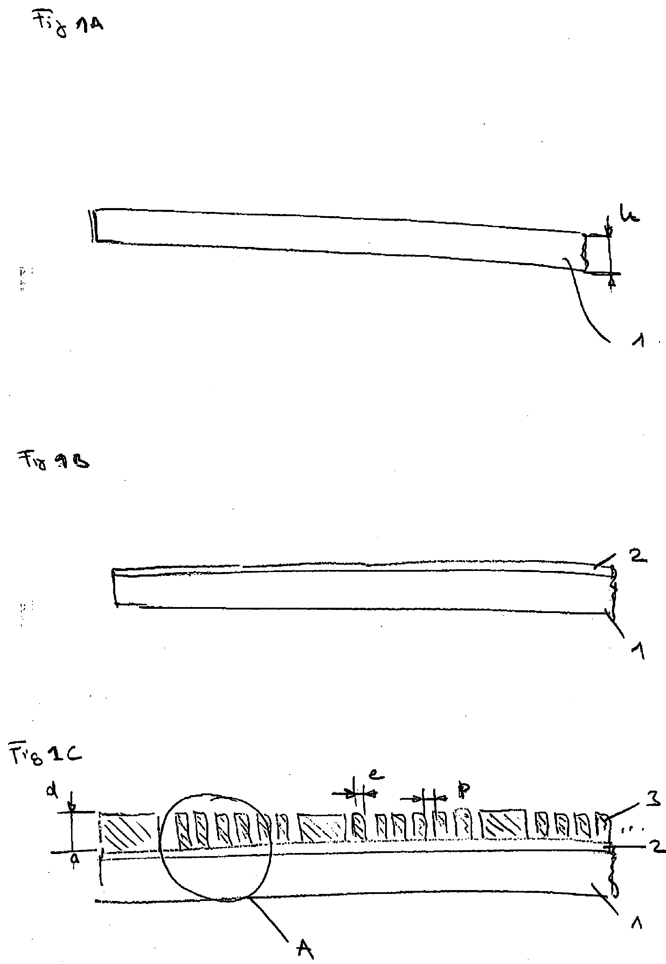

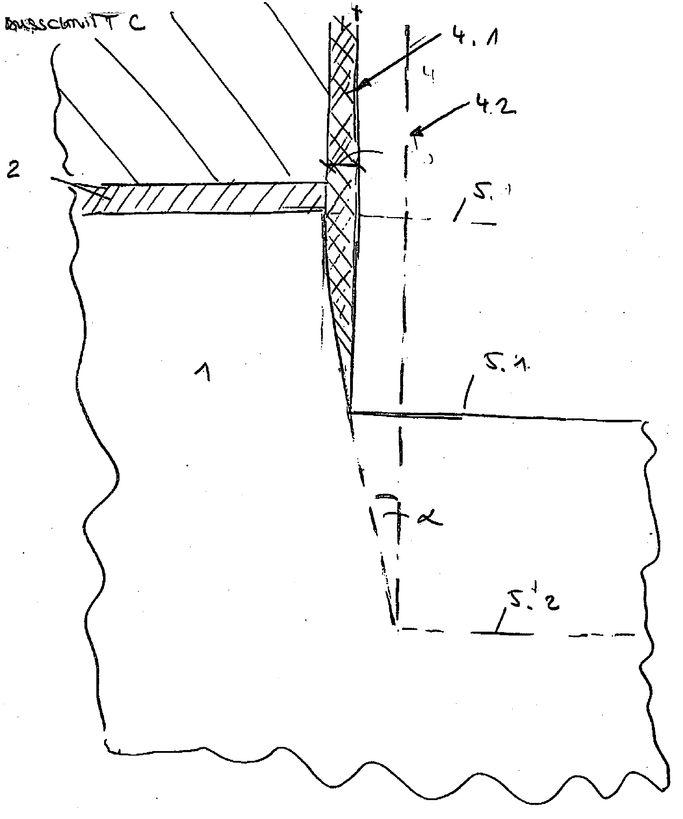

In Fig. 1A ist eine Aluminium-Glaskeramikscheibe aus Zerodur dargestellt. Die Dicke dieser Scheibe entspricht der späteren Höhe h der Feder, d.h. typisch sind hier 50-200$\mu$m.

Fig. 1B zeigt den nächsten Verfahrensschritt des Auftragens des Klebstoffs. Dieser wird mit einem Spincoatingverfahren aufgebracht, um eine möglichst homogene und dünne Klebstoffschicht zu erhalten. Ist die Oberflächenspannung des Klebstoffs zu groß (erkennbar an einer Tröpfchenbildung), so kann dies durch eine Sauerstoffplasmabehandlung der Oberfläche der Aluminium-Glaskeramikscheibe verbessert werden. Dieser Schritt reinigt nicht nur die Oberfläche der Aluminium-Glaskeramikscheibe, er erhöht auch dessen Oberflächenspannung, so dass der Klebstoff besser benetzt.

In Fig. 1C wird der vorstrukturierte Si-Wafer auf die Oberfläche der Aluminium-Glaskeramikscheibe geklebt. Es befinden sich viele Spiralen auf einem Wafer, welche nur durch kleine Haltestege im Waferrahmen gehalten werden. Die Federblattstärke e ist bereits (bis auf wenige prozessbedingte Korrekturen) im Silizium abgebildet. Die Höhe des Maskenwafers wird so gewählt, dass genügend Abtrag der Maske von der Oberfläche (OF) zugelassen werden kann. Typischerweise ist diese Abtragsrate physikalisch bedingt, wird also durch den Ionenbeschuss dominiert und bewegt sich in der gleichen Größenordnung wie die Abtragsrate in vertikaler Richtung der Aluminium-Glaskeramikscheibe.

Der in Fig. 1C markierte, kreisförmige Ausschnitt A zeigt in vergrößertem Maßstab den Zustand des Systems nach dem Aufkleben des Wafers. Auf der Aluminium-Glaskeramikscheibe 1 ist eine Klebstoffschicht 2 aufgetragen, die die Haftung des strukturierten Wafers 3 als Maske ermöglicht. Die Stege des strukturierten Wafers 3 weisen eine Breite e auf, während die Abstände der Stege zueinander eine Breite p haben. Der Klebstoff sollte so dünn wie möglich aufgebracht werden. Typische Dicken sind hier um $1\mu m$. Es wäre auch möglich den Wafer mittels eines Photolackes aufzukleben, wobei diese aber in der Regel nicht so resistent gegenüber Chemikalien sind, lateral angegriffen werden können und letztendlich sich die Maske vom Substrat lösen kann.

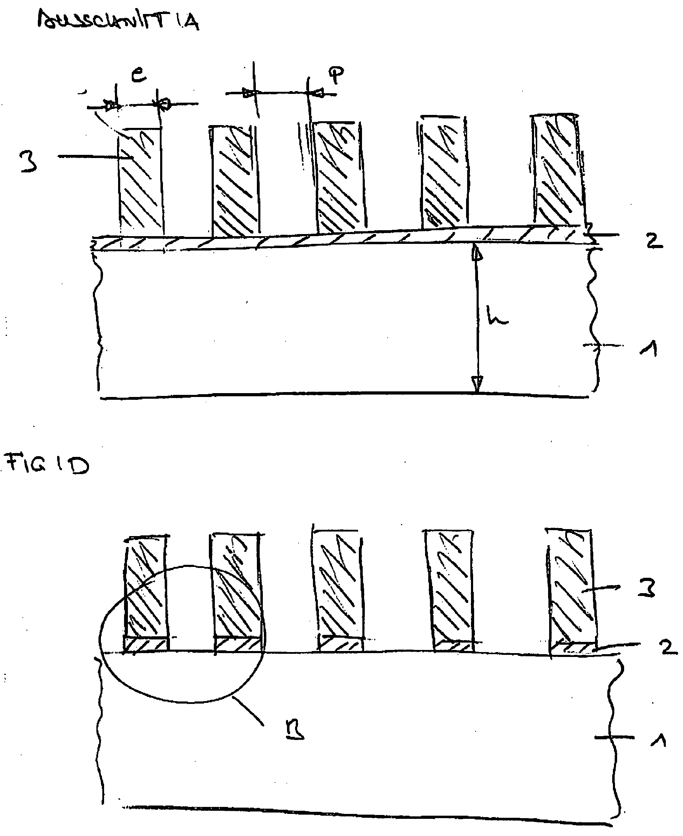

In Fig. 1D wird der Zustand des Systems nach dem Entfernen des Klebstoffs gezeigt. Der Prozess arbeitet bei keiner oder einer sehr kleinen Biasspannung, so dass die Aluminium-Glaskeramikscheibe nicht oder nahezu nicht angegriffen wird. Da der Klebstoff chemisch (isotrop) im Plasma angegriffen wird, muss darauf geachtet werden, dass der Klebstoff möglichst nicht unterätzt (d.h. unter der Maske weggeätzt) wird.

Der in Fig. 1D markierte, kreisförmige Ausschnitt B zeigt in vergrößertem Maßstab den Beginn der Plasmaätzung des Aluminium-Glaskeramikscheibe. Da die Glaskeramik aus vielen chemischen Elementen besteht, muss der Ätzprozess eine hohe physikalische Komponente aufweisen, um ein homogenes, anisotropes Ätzergebnis mit glattem Ätzgrund zu erhalten. Hierzu ist eine hohe Biasspannung notwendig (typischerweise -200 bis -1000V). Durch den Beschuss mit Argon-Ionen werden aus der Aluminium-Glaskeramik Atome und Moleküle herausgesputtert. Diese werden teilweise redeponiert. Dies gilt insbesondere für die Elemente, die keine oder nur komplexe chemische Verbindungen mit dem Reaktionsgas bilden und deshalb nur bedingt gasförmig abtransportiert werden können. Beim der Aluminium-Glaskeramik Zerodur ist dies insbesondere Al.

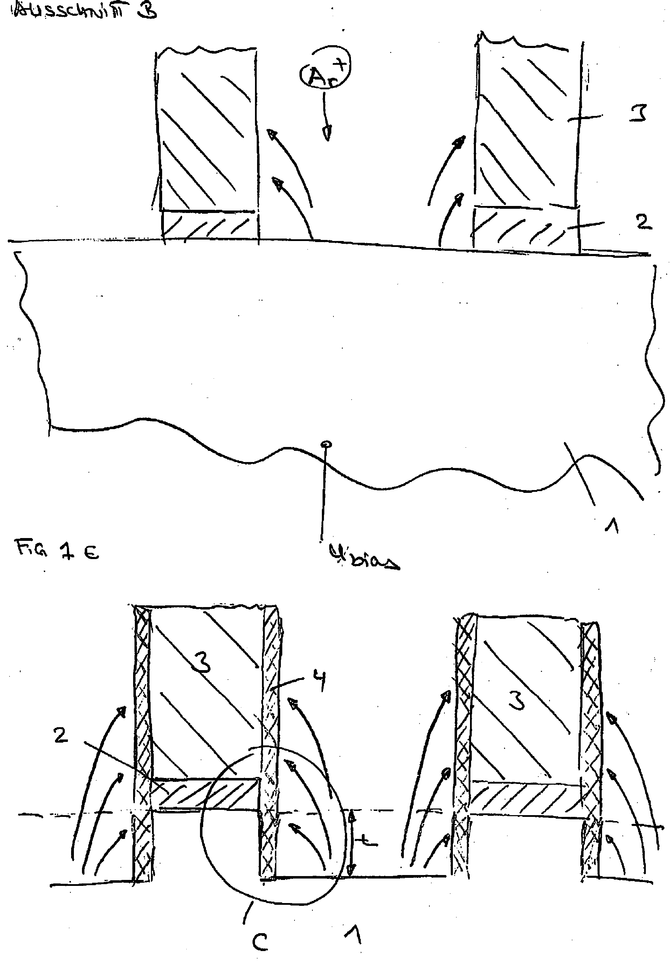

In Fig. 1E zeigt sich, dass sich durch das Sputtern ein aluminiumhaltiger Belag 4 als Schicht auf den Seitenflanken von Ätzmaske und Aluminium-Glaskeramik abgeschieden hat. Er wird mit einer bestimmten, messbaren Rate deponiert, welche mittels Querbruch im Rasterelektronenmikroskop analysiert werden kann. Die elementare Zusammensetzung der Schicht ergibt sich aus EDX-Analysen. Fig. 1E zeigt schematisch den Ätzangriff unmittelbar nach dem Beginn des Prozesses.

Neben dem Edelgas Ar, werden weitere reaktive Komponenten beigemischt. Diese sind im Fall von Zerodur Fluor ($CF_4$) und Sauerstoff($O_2$). Diese Lösen beispielsweise den Siliziumanteil im Zerodur und überführen diesen in die Gasphase. Hieraus resultiert aber auch ein chemischer Angriff der Maskenwafers (Si), der verhindert werden muss um die Maske in Ihren lateralen Abmessungen konstant zu halten. Dies wird ebenfalls durch die Schicht 4 ermöglicht.

Der in Fig. 1E markierte, kreisförmige Ausschnitt C zeigt die Bildung der Schicht 4 nach bestimmten Ätzzeiten. Die Schicht 4.1 hat eine bestimmte Stärke nach einer bestimmten Ätzzeit t erreicht. Der hierzu korrelierende Ätzgrund ist 5.1. Da der Schichtdickenauftrag der Schicht 4 im Wesentlichen linear mit der Zeit zunimmt, muss die Schicht einen Gradienten in Richtung des Ätzgrundes aufweisen (Abnahme zum Ätzgrund hin). Die Schichtdicke der Schicht 4 beträgt 0 am Ätzgrund 5.1. Da die Schicht 4 wie eine Maske wirkt folgt hieraus auch ein linearer Versatz der Seitenflanke des Zerodur. Der sich abbildende Winkel der Seitenflanke (Vertikalität) ergibt sich aus der Auftragsrate (Depositionsrate ergibt sich aus dem Arcustangens der Beträge der Depositionsrate der Schicht $V_4$/Ätzrate $V_{Zerodur}$). Die gestrichelte Linie zeigt schematisch die Entwicklung des Schichtdickenprofils 4.2 des Ätzprofils und des Ätzgrundes 5.2 zu einem späteren Zeitpunkt.

Wird nun noch eine chemische Komponente beigemischt, welche die Schicht 4 isotrop, d.h. chemisch angreift, kann der Betrag des Vektor $V_4$ verkleinert werden, ohne dass hierbei die Ätzrate der Glaskeramik abnimmt. Hieraus resultiert bei der richtigen Einstellung des dynamischen Gleichgewichts (Ätzen-Deponieren) im besten Fall eine verschwindende Komponente $V_4$ und mithin ein Winkel $\alpha$ von 0°.

Die Einstellung des Winkels wird im Fall von aluminiumhaltigen Schichten 4 durch Zugabe von Chlor erreicht. Die Ätzrate kann über die Gaszusammensetzung kontrolliert (Chlorkonzentration) werden. Da die Reaktionen von vielen Parametern abhängen, muss die Depositionsrate, wie auch die Ätzrate im Experiment ermittelt werden. Als potenzielle Chlorlieferanten dienen die Gase $BCl_3$, $SiCl_6$ und $Cl_2$.

Sobald der Wafer bis zur vollen Stärke durchgeätzt ist, kann die Maske entfernt (nasschemischer Angriff des Klebstoffs) und ggf. Reste der Al-Schicht 4 nasschemisch entfernt werden (z.B. mit Phosphorsäure).

Falls auf Chlorgas verzichtet werden soll kann auch der Ätzprozess unterbrochen werden und die Schicht 4 in mehreren Etappen nasschemisch entfernt werden. Hierzu ist aber ein chemisch stabiles Interface (Klebstoff 2) notwendig. Ferner lässt sich durch dieses Vorgehen nicht vermeiden, dass sich ein gewisser resultierender Winkel $\alpha$ ausbildet.

Modifikationen: Es ist denkbar den Prozess auch in einem induktiv gekoppelten Plasma(ICP)-Reaktoren durchzuführen. Hierzu ist aber in jedem Fall auch eine hohe Biasspannung notwendig. Der ICP Reaktor hat den Vorteil der höheren Plasmadichte und somit der höheren Ätzrate.

Ferner können auch andere Gängige reaktive Gase als Ätzgase zum Angriff des Zerodursubstrates verwendet werden wie beispielsweise $SF_6$, $BF_3$, $ClF_3$, $SiF_4$, $CClF_3$, $CBrF_3$, $CCl_2F_2$, $CCl_3F$, $SiCl_4$, $C_2ClF_5$, $C_2F_4$, $C_2F_6$, $C_3F_8$, $C_4F_8$, ö.ä.

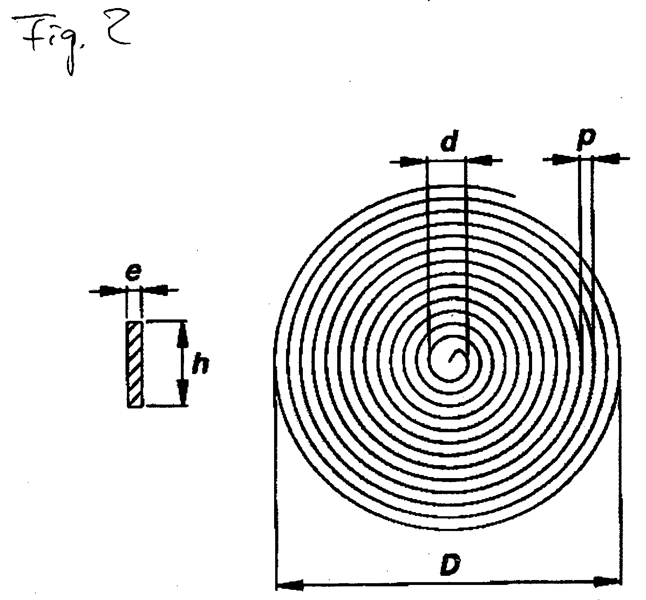

Figur 2 zeigt eine erfindungsgemäße Spiralfeder, die aus einem Federblatt gebildet ist, das in Windungen zur Spiralfeder aufgewickelt ist. Die Windungen verlaufen dabei senkrecht um eine (imaginäre) Wicklungsachse, die senkrecht zur Zeichnungsebene verläuft. Das Federblatt ist dabei hinsichtlich seiner Stärke I (senkrecht zur Wicklungsachse) sowie seiner Dicke s (parallel zur Wicklungsgachse) homogen ausgebildet. Beispielhafte Werte für I liegen dabei zwischen 10 und 500 $\mu$m. Beispielhafte Werte fürs liegen dabei zwischen 30 und 500 $\mu$m. Der Abstand p zwischen jeweils zwei Windungen des Federblatts ist dabei ebenso über die gesamte Wicklung konstant gehalten.

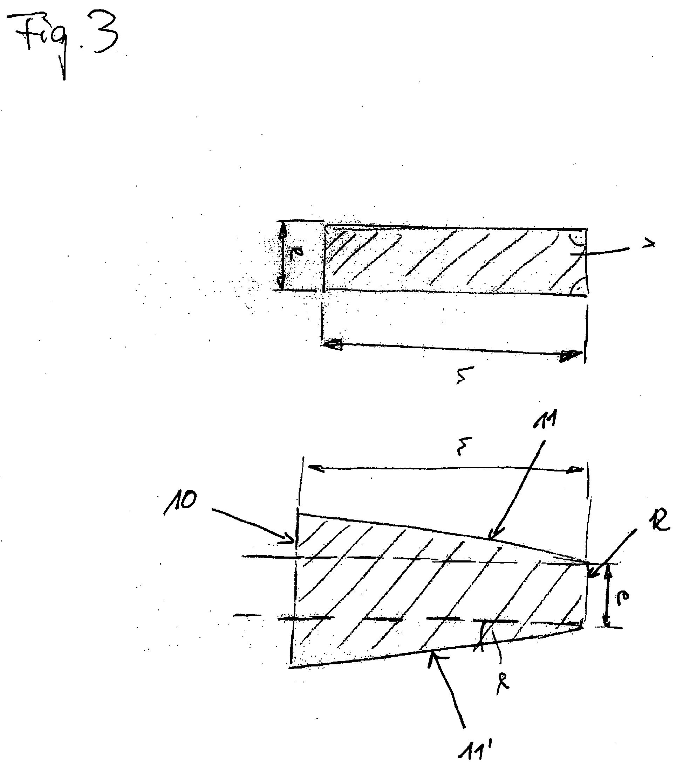

Figur 3 zeigt einen Querschnitt eines Federblatts einer erfindungsgemäßen Spiralfeder mit zwei parallelen Oberflächen 10, 12 als erste Oberflächen und Flanken 11, 11' als zweite Oberflächen. Die Oberflächen 10, 12 und Flanken 11, 11' stehen im Wesentlichen senkrecht zu einander. Die Vertikalität der Flanken 11, 11' weicht dabei höchstens zu einem Winkel $\alpha < 10°$, vorzugsweise $\alpha < 5°$, vorzugsweise $\alpha < 2°$ von der orthogonalen Orientierung ab.

**Beispiel**

Das erfindungsgemäße Verfahren wurde mit einem RIE System im RF Parallelplattenmodus, Oxford PL 80plus oder äquivalent mit 240mm großer Substratelektrode, Elektrodenabstand 50mm durchgeführt.

**Schritt 1: Prozess zur Entfernung der Kleberreste:**

Gaszusammensetzung/Gasfluss:

| | |
|---|---|
| O2: | 50sccm |
| Kammerdruck: | 150mTorr |
| RF Forward power: | 150W |
| Dauer: | 1h30min |
| Regelmodus: | Forward power |

**Schritt 2: Ätzen von Zerodur**

Gaszusammensetzung/Gasfluss:

| | |
|---|---|
| Ar: | 40sccm |
| $CF_4$: | 10sccm |
| Kammerdruck: | 10mTorr |
| $U_{bias}$: | -830V (-890V) |
| Dauer: | 3h |
| Regelmodus: | $U_{bias}$ |

**Schritt 3: Reinigung der Kammerwände**

Gaszusammensetzung/Gasfluss:

| | |
|---|---|
| $CF_4$: | 28sccm |
| Ar: | 16sccm |
| $O_2$: | 34sccm |
| $N_2$: | 20sccm |
| Kammerdruck: | 50mTorr |
| $U_{bias}$: | -830V |
| Dauer: | 30min |
| Regelmodus: | $U_{bias}$ |

Die Proben können während des Reinigungsschrittes in der Kammer verbleiben. Ziel ist es, die Kammerwände von parasitären Belägen zu befreien.

Schritt 2 und 3 werden ständig wiederholt, solange bis der Glaskeramikwafer vollständig durchgeätzt ist. Um die Schicht 4 auf den Seitenflanken zu entfernen, wird zusätzlich die Schleife, bestehend aus Schritt 2 und 3 nach je 30$\mu$m Ätztiefe (bezogen auf das Zerodur) unterbrochen und die Proben nasschemisch gereinigt.

Die so erzielte Ätzrate im Zerodur liegt bei etwa 1,4 μm/h (2 μm für eine Biasspannung von -890V). Der erreichbare Fehler der Vertikalität bei 8-12°. Es wird ferner ersichtlich, dass eine Erhöhung der Biasspannung um 7,2% (Werte in Klammern) eine Erhöhung der Ätzrate um 42,8% bewirkt.

**Patentansprüche**

1. Spiralfeder, umfassend ein in Windungen zur Spiralfeder aufgewickeltes Federblatt, das einen im Wesentlichen rechteckigen Querschnitt aufweist, wobei das Federblatt zumindest bereichsweise oder vollständig aus einer Glaskeramik gebildet ist, die einen linearen thermischen Ausdehnungskoeffizienten im Temperaturbereichen von -50 bis 100°C von 0 bis 2 $10^{-6}$·$K^{-1}$, insbesondere von 0 bis 0,5 $10^{-6}$·$K^{-1}$ aufweist, **dadurch gekennzeichnet dass** der Winkel des im Wesentlichen rechtwinkligen Querschnitts um weniger als 5° von der Senkrechten abweicht.

2. Spiralfeder nach Anspruch 1, **dadurch gekennzeichnet, dass** mindestens eine Oberfläche des Federblattes zumindest bereichsweise oder vollständig aus der Glaskeramik gebildet ist.

3. Spiralfeder nach einem der vorhergehenden Ansprüche, **dadurch gekennzeichnet, dass** die Glaskeramik eine Aluminiumsilikat-Glaskeramik ist, insbesondere ausgewählt aus der Gruppe bestehend aus Zerodur, Zerodur M und/oder Zerodur K20.

4. Spiralfeder nach einem der vorhergehenden Ansprüche, **dadurch gekennzeichnet, dass** der Winkel des im Wesentlichen rechtwinkligen Querschnitts um weniger als 2° von der Senkrechten abweicht.

5. Spiralfeder nach einem der vorhergehenden Ansprüche, **dadurch gekennzeichnet, dass** mindestens eine der Oberflächen des Federblattes eine mittlere Rauigkeit $R_{rms} \leq 10$ μm, bevorzugt $\leq 5$ μm, besonders bevorzugt $\leq 2$ μm, insbesondere $\leq 500$ nm aufweist.

6. Spiralfeder nach einem der vorhergehenden Ansprüche, **dadurch gekennzeichnet, dass** die Dicke des Federblatts, parallel zur Wicklungsachse von 30 μm bis 500 μm, insbesondere von 100 μm bis 200 μm beträgt.

7. Spiralfeder nach einem der vorhergehenden Ansprüche, **dadurch gekennzeichnet, dass** die Stärke des Federblatts senkrecht zur Wicklungsachse von 10 μm bis 500 μm, bevorzugt von 10 μm bis 50 μm beträgt.

8. Verfahren zur Herstellung einer Spiralfeder nach Anspruch 1 , mit den folgenden Schritten:

   a) Bereitstellen eines strukturierten Wafers als Maske,
   b) Auftragen eines Klebstoffs auf einer Oberfläche einer Scheibe der Glaskeramik,
   c) Aufkleben der Maske auf der mit Klebstoff versehenen Oberfläche der Glaskeramik-Scheibe,
   d) Entfernung des in den strukturierten Bereichen der Maske verbleibenden Klebstoffs,
   e) Materialabtrag an der Oberfläche der Glaskeramik-Scheibe in den durch die Maske vorgegebenen strukturierten Bereichen mittels Plasmaätzen, wobei eine Biasspannung von kleiner oder gleich -200 V zum Sputtern der Glaskeramik-Scheibe angelegt wird und es zu einer Redeposition des gesputterten Materials an den Seitenflanken der strukturierten Bereiche der Maske sowie der Glaskeramik-Scheibe in Form einer Sputterschicht kommt sowie
   f) Chemisches Ätzen zur Entfernung der Sputterschicht an den Seitenflanken der strukturierten Bereiche der Maske sowie der Glaskeramik-Scheibe.

9. Verfahren nach dem vorhergehenden Anspruch, **dadurch gekennzeichnet, dass** der Ätzschritt trockenchemisch unter Zuhilfenahme eines Plasmas oder durch reaktives Ionenätzen (RIE) durchgeführt wird.

10. Verfahren nach einem der Ansprüche 8 oder 9, **dadurch gekennzeichnet, dass** die Schritte e) und f) simultan erfolgen, indem beim Plasmaätzen vorzugsweise eine chlorhaltige Komponente der Gasatmosphäre zugesetzt wird, so dass die Redeposition des gesputterten Materials und das chemische Ätzen der sich bei der Redeposition bildenden Sputterschicht auf den Seitenflanken gleichzeitig erfolgen.

11. Verfahren nach einem der Ansprüche 8 bis 10, **dadurch gekennzeichnet, dass** die Ätzmaske und die erste Schicht in ein oder mehreren Ätzschritten gemeinsam oder getrennt voneinander geätzt werden.

**12.** Verfahren nach einem der Ansprüche 8 bis 11, **dadurch gekennzeichnet, dass** vor dem Durchführen des mindestens einen Ätzschrittes zur Strukturierung der Spiralfeder umfassenden Verfahrens eine Strukturierung des Substratmaterials durchgeführt wird und das strukturierte Substratmaterial als Ätzmaske verwendet wird.

**13.** Verfahren nach einem der Ansprüche 8 bis 12, **dadurch gekennzeichnet, dass** mit Sauerstoff, Fluor und/oder Chlor als reaktiver Komponente oder mit einem Edelgas der Gruppe 8 des Periodensystems als physikalische Komponente geätzt wird.

**14.** Verfahren nach einem der Ansprüche 8 bis 13, **dadurch gekennzeichnet, dass** während des Ätzschrittes eine Biasspannung von -200 bis -1500 Volt, bevorzugt von -250 bis -1000 Volt, besonders bevorzugt von -500 bis-900 Volt an dem Substrat anliegt bzw. angelegt wird.

**15.** Verfahren nach den Ansprüchen 8 bis 14, **dadurch gekennzeichnet, dass** der Ätzschritt ein- oder mehrmals in unterschiedlichen oder periodischen Abständen unterbrochen wird, wobei bevorzugt während der Unterbrechung des Ätzschrittes eine Reinigung der Substratoberfläche, beispielsweise von Redepositionen, durchgeführt wird.

**16.** Verfahren nach den Ansprüchen 8 bis 15, **dadurch gekennzeichnet, dass** das Substratmaterial bevorzugt eine Si-Scheibe ist, die auf einem Wafer aus der Aluminium Glaskeramik aufgeklebt wird.

**17.** Verfahren nach Anspruch 16, **dadurch gekennzeichnet, dass** der freiliegende Klebstoff entfernt wird.

**18.** Verwendung einer Spiralfeder nach einem der Ansprüche 1 bis 7 für ein mikromechanisches Getriebe, ein Mikrogetriebe, insbesondere ein Uhrwerk.

**19.** Mikromechanisches Getriebe, insbesondere Mikrogetriebe oder Uhrwerk, umfassend eine Spiralfeder nach einem der Ansprüche 1 bis 7.

**Claims**

**1.** Spiral spring, comprising a spring leaf wound up in coils to form the spiral spring, said spring leaf having a substantially rectangular cross section, wherein the spring leaf is formed at least in regions or completely from a glass ceramic which has a linear thermal expansion coefficient in the temperature ranges from -50 to 100°C, from 0 to 2 $10^{-6} \cdot K^{-1}$, in particular from 0 to 0.5 $10^{-6} \cdot K^{-1}$, **characterised in that** the angle of the substantially rectangular cross section deviates by less than 5° from the perpendicular.

**2.** Spiral spring according to claim 1, **characterised in that** at least one surface of the spring leaf is formed at least in regions or completely from glass ceramic.

**3.** Spiral spring according to one of the preceding claims, **characterised in that** the glass ceramic is an aluminium silicate glass ceramic, in particular selected from the group consisting of Zerodur, Zerodur M and/or Zerodur K20.

**4.** Spiral spring according to one of the preceding claims, **characterised in that** the angle of the substantially rectangular cross section deviates by less than 2° from the perpendicular.

**5.** Spiral spring according to one of the preceding claims, **characterised in that** at least one of the surfaces of the spring leaf has an average roughness $R_{rms} \leq 10 \mu m$, preferably $\leq 5 \mu m$, particularly preferably $\leq 2 \mu m$, in particular $\leq 500 nm$.

**6.** Spiral spring according to one of the preceding claims, **characterised in that** the thickness of the spring leaf parallel to the winding axis is from $30 \mu m$ to $500 \mu m$, in particular from $100 \mu m$ to $200 \mu m$.

**7.** Spiral spring according to one of the preceding claims, **characterised in that** the strength of the spring leaf perpendicular to the winding axis is from $10 \mu m$ to $500 \mu m$, preferably from $10 \mu m$ to $50 \mu m$.

**8.** Method for the production of a spiral spring according to claim 1, having the following steps:

a) supplying a structured wafer as a mask,

b) applying an adhesive to a surface of a panel of the glass ceramic,

c) affixing the mask to the surface of the glass ceramic panel provided with adhesive,

d) removing the adhesive remaining in the structured regions of the mask,

e) removing material on the surface of the glass ceramic panel in the structured regions predetermined by the mask by means of plasma etching, wherein a bias voltage of less than or equal to -200 V is applied for sputtering the glass ceramic panel and a redeposition of the sputtered material on the side edges of the structured regions of the mask and the glass ceramic panel results in the form of a sputter layer and

f) chemical etching for the removal of the sputter layer on the side edges of the structured regions of the mask and the glass ceramic panel.

9. Method according to the preceding claim, **characterised in that** the etching step is carried out as dry chemical etching with the aid of a plasma or by reactive ion etching (RIE).

10. Method according to one of claims 8 or 9, **characterised in that** steps e) and f) occur simultaneously by a chlorinated component preferably being added to the gas atmosphere during plasma etching, such that the redeposition of the sputtered material and the chemical etching of the sputter layer on the side edges, said sputter layer forming during redeposition, occur at the same time.

11. Method according to one of claims 8 to 10, **characterised in that** the etching mask and the first layer are etched together or separately of each other in one or more etching steps.

12. Method according to one of claims 8 to 11, **characterised in that**, before implementing the method comprising at least one etching step for the structuring of the spiral spring, structuring of the substrate material is carried out and the structured substrate material is used as an etching mask.

13. Method according to one of claims 8 to 12, **characterised in that** etching is carried out with oxygen, fluorine and/or chlorine as a reactive component or with a noble gas from group 8 of the periodic table as a physical component.

14. Method according to one of claims 8 to 13, **characterised in that** a bias voltage from - 200 to -1500 volts, preferably from -250 to -1000 volts, particularly preferably from - 500 to -900 volts is present at or is applied to the substrate during the etching step.

15. Method according to claims 8 to 14, **characterised in that** the etching step is broken down once or several times into varying or periodic intervals, wherein, preferably during the interruption of the etching step, cleaning of the substrate surface, for example of redepositions, is carried out.

16. Method according to claims 8 to 15, **characterised in that** the substrate material is preferably an Si panel which is affixed to a wafer made from aluminium glass ceramic.

17. Method according to claim 16, **characterised in that** the exposed adhesive is removed.

18. Use of a spiral spring according to one of claims 1 to 7 for micromechanical gears, micro gears, in particular a clockwork mechanism.

19. Micromechanical gears, in particular micro gears or a clockwork mechanism, comprising a spiral spring according to one of claims 1 to 7.

**Revendications**

1. Ressort spiralé comprenant une lame de ressort enroulée dans les spires du ressort spiralé, qui présente une section transversale globalement rectangulaire, la lame de ressort étant constituée au moins partiellement ou entièrement d'une vitrocéramique, qui présente un coefficient de dilatation thermique linéaire, sur des plages de températures de -50 à 100°C, de 0 à $2.10^{-6}K^{-1}$, plus particulièrement de 0 à 0,5. $10^{-6}k^{-1}$, **caractérisé en ce que** l'angle de la section transversale globalement rectangulaire s'éloigne de moins de 5° de la verticale.

2. Ressort spiralé selon la revendication 1, **caractérisé en ce qu'**au moins une surface de la lame de ressort est constituée au moins partiellement ou entièrement de vitrocéramique.

3. Ressort spiralé selon l'une des revendications précédentes, **caractérisé en ce que** la vitrocéramique est une vitrocéramique à silicate d'aluminium, plus particulièrement sélectionnée dans le groupe constitué du Zerodur, du Zerodur M et/ou du Zerodur K20.

4. Ressort spiralé selon l'une des revendications précédentes, **caractérisé en ce que** l'angle de la section transversale globalement rectangulaire s'éloigne de la verticale de moins de 2°.

5. Ressort spiralé selon l'une des revendications précédentes, **caractérisé en ce qu'**au moins une des surfaces de la lame de ressort présente une rugosité moyenne $R_{ms} \leq 10~\mu m$, de préférence $\leq 5~\mu m$, plus particulièrement de préférence $\leq 2~\mu m$, plus particulièrement $\leq 500~nm$.

6. Ressort spiralé selon l'une des revendications précédentes, **caractérisé en ce que** l'épaisseur de la lame de ressort parallèlement à l'axe des spires est de $30~\mu m$ à $500~\mu m$, plus particulièrement de $100~\mu m$ à $200~\mu m$.

7. Ressort spiralé selon l'une des revendications précédentes, **caractérisé en ce que** l'épaisseur de la lame de ressort perpendiculairement à l'axe des spires est de $10~\mu m$ à $500~\mu m$, de préférence de $10~\mu m$ à $50~\mu m$.

8. Procédé pour la fabrication d'un ressort spiralé selon la revendication 1, comprenant les étapes suivantes :

   a) réalisation d'une tranche structurée en tant que masque,
   b) application d'une colle sur une surface d'un disque de vitrocéramique,
   c) collage du masque sur la surface du disque de vitrocéramique munie de colle,
   d) élimination de la colle restant dans les zones structurées du masque,
   e) enlèvement de matériau sur la surface du disque de vitrocéramique dans les zones structurées prédéterminées par le masque, par gravure au plasma, une tension de polarisation inférieure ou égale à -200 V étant appliquée pour la pulvérisation du disque de vitrocéramique et une redéposition du matériau pulvérisé sur les flancs latéraux des zones structurées du masque ainsi que du disque de vitrocéramique sous la forme d'une couche de pulvérisation, ainsi que
   f) gravure chimique pour l'élimination de la couche de pulvérisation au niveau des flancs latéraux des zones structurées du masque ainsi que du disque de vitrocéramique.

9. Ressort spiralé selon l'une des revendications précédentes, **caractérisé en ce que** l'étape de gravure est effectuée à l'aide d'un procédé chimique à sec au moyen d'un plasma ou par gravure ionique réactive (RIE).

10. Ressort spiralé selon l'une des revendications 8 ou 9, **caractérisé en ce que** les étapes e) et f) ont lieu simultanément, en ajoutant, lors de la gravure au plasma, de préférence un composant chloré de l'atmosphère de gaz, de façon à ce que la redéposition du matériau pulvérisé et la gravure chimique de la couche de pulvérisation se formant lors de la redéposition aient lieu simultanément sur les flancs latéraux.

11. Ressort spiralé selon l'une des revendications 8 à 10, **caractérisé en ce que** le masque de gravure et la première couche sont gravés ensemble ou séparément dans une ou plusieurs étapes de gravure.

12. Ressort spiralé selon l'une des revendications 8 à 11, **caractérisé en ce que**, avant la réalisation du procédé comprenant au moins une étape de gravure pour la structuration du ressort spiralé, une structuration du matériau de substrat est effectuée et le matériau de substrat structuré est utilisé comme masque de gravure.

13. Ressort spiralé selon l'une des revendications 8 à 12, **caractérisé en ce que** la gravure est effectuée avec de l'oxygène, du fluor et/ou du chlore en tant que réactif ou avec un gaz noble du groupe 8 du système périodique en tant que composant physique.

14. Ressort spiralé selon l'une des revendications 8 à 13, **caractérisé en ce que**, pendant l'étape de gravure, une tension de polarisation de -200 à -1500 Volt, de préférence de -250 à -1000 Volt, plus particulièrement de préférence de -500 à -900 Volt est appliquée au substrat.

15. Ressort spiralé selon l'une des revendications 8 à 14, **caractérisé en ce que** l'étape de gravure est interrompue une ou plusieurs fois à des intervalles différents ou périodiques, un nettoyage de la surface du substrat, par exemple des redépositions, étant effectuée de préférence pendant l'interruption de l'étape de gravure.

**16.** Ressort spiralé selon les revendications 8 à 15, **caractérisé en ce que** le matériau du substrat est de préférence un disque en Si, qui est collé sur une tranche en vitrocéramique d'aluminium.

**17.** Procédé selon la revendication 16, **caractérisé en ce que** la colle en excès est éliminée.

**18.** Utilisation d'un ressort spiralé selon l'une des revendications 1 à 7 pour un engrenage micromécanique, un micro-engrenage, plus particulièrement un mouvement d'horlogerie.

**19.** Engrenage micromécanique, plus particulièrement micro-engrenage ou mouvement d'horlogerie comprenant un ressort spiralé selon l'une des revendications 1 à 7.

Fig 1A

Fig 1B

Fig 1C

AUSSCHNITT 1A

FIG 1D

Ausschnitt B

$A_r^+$

3

2

FIG 7 E

$U_{bias}$

2

3

4

3

t

C

1

1

Ausschnitt C

2

4.1

4.2

5.1

1

5.1

7 α

5.2

Fig. 2

# Fig. 3

**IN DER BESCHREIBUNG AUFGEFÜHRTE DOKUMENTE**

**In der Beschreibung aufgeführte Patentdokumente**

- WO 2004092049 A1
- WO 2004092094 A1
- WO 2009068091 A1
- EP 1791039 A1
- CH 702151 A1